(19) **Europäisches Patentamt / European Patent Office / Office européen des brevets**

(11) **EP 4 772 569 A1**

(12) **EUROPEAN PATENT APPLICATION**
published in accordance with Art. 153(4) EPC

(43) Date of publication:
08.07.2026 Bulletin 2026/28

(21) Application number: 24859363.4

(22) Date of filing: 05.08.2024

(51) International Patent Classification (IPC):
*C08L 21/00* (2006.01)    *B60C 1/00* (2006.01)
*B60C 15/06* (2006.01)    *B60C 19/00* (2006.01)
*C08K 3/04* (2006.01)

(52) Cooperative Patent Classification (CPC):
B60C 1/00; B60C 15/06; B60C 19/00; C08K 3/04;
C08L 21/00

(86) International application number:
PCT/JP2024/027970

(87) International publication number:
WO 2025/047323 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.08.2023 JP 2023138386

(71) Applicant: BRIDGESTONE CORPORATION
Chuo-ku
Tokyo 104-8340 (JP)

(72) Inventors:
• TAHARA, Seiichi
Tokyo 104-8340 (JP)
• ASAMI, Keisuke
Tokyo 104-8340 (JP)
• KATO, Seiichi
Tokyo 104-8340 (JP)

(74) Representative: Marks & Clerk LLP
15 Fetter Lane
London EC4A 1BW (GB)

(54) **RUBBER COMPOSITION AND TIRE**

(57) Provided is a rubber composition capable of suppressing the occurrence of surface roughening of rubber during mold vulcanization and contributing to improved sustainability. The rubber composition contains a rubber component and carbon black including recovered carbon black, wherein the recovered carbon black constitutes a plurality of aggregates in the rubber composition, and in a particle size distribution A with carbon black having a diameter of 1.0 μm or more among the carbon black as a subject, a proportion of particles having a diameter of 5.0 μm or more is 1% or more.

EP 4 772 569 A1

**Description**

TECHNICAL FIELD

The present disclosure relates to a rubber composition and a tire.

BACKGROUND

In the vulcanization process during tire manufacturing, insufficient air release between the mold and the rubber surface in contact with the mold may result in the occurrence of an air entrapment phenomenon. When such an air entrapment phenomenon occurs, roughening may develop on the rubber surface after vulcanization. This problem of rubber surface roughening is often observed particularly in locations molded into complex external shapes, such as the bead portion of a tire, and can also be a cause of poor tire appearance.

As a countermeasure to the above-described problem, for example, PTL 1 discloses that by disposing a urethane film on the inner surface of the mold or on the outer surface of the tire prior to the vulcanization process, the urethane film serves as a protective film, which is effective in suppressing the occurrence of the air entrapment phenomenon and, consequently, the occurrence of rubber surface roughening.

CITATION LIST

Patent Literature

PTL 1: JP 2017-094853 A

SUMMARY

(Technical Problem)

Here, the technique described in PTL 1 requires an additional member and process for forming the urethane film. In contrast, there is a demand to address the above-described problem by optimizing the rubber material itself that comes into contact with the mold.

In addition, in recent years, from the perspective of societal sustainability, it has been required in businesses and products to use so-called sustainable materials, such as materials derived from biological resources (biomass resources) or recycled resources, and for various members used in tires as well, improvement in the usage rate of sustainable materials (hereinafter, sometimes referred to as the "sustainable ratio") is being sought.

Accordingly, an object of the present disclosure is to provide a rubber composition capable of suppressing the occurrence of rubber surface roughening during mold vulcanization and contributing to improved sustainability.

Further, an object of the present disclosure is to provide a tire in which rubber surface roughening is suppressed and which can contribute to improved sustainability.

(Solution to Problem)

That is, the gist configuration of the rubber composition and tire of the present disclosure that solves the above problems is as follows.

[1] A rubber composition comprising a rubber component and carbon black including recovered carbon black, wherein

the recovered carbon black constitutes a plurality of aggregates in the rubber composition, and
in a particle size distribution A with carbon black having a diameter of 1.0 $\mu$m or more among the carbon black as a subject, a proportion of particles having a diameter of 5.0 $\mu$m or more is 1% or more.

[2] The rubber composition according to [1], wherein the recovered carbon black is obtained by pyrolysis of a vulcanized rubber product containing carbon black.

[3] The rubber composition according to [1] or [2], wherein the recovered carbon black has an ash content of 20 mass% or less.

[4] The rubber composition according to any one of [1] to [3], wherein, in the particle size distribution A, the proportion of particles having a diameter of 5.0 $\mu$m or more is 10% or more.

[5] The rubber composition according to any one of [1] to [4], further comprising at least one of rubber powder and recovered rubber.

[6] A tire obtained using the rubber composition according to any one of [1] to [5].

[7] The tire according to [6], wherein

the tire comprises a pair of bead portions, a pair of sidewall portions, a tread portion continuous with both of the sidewall portions, and a carcass including at least one carcass ply extending toroidally between the pair of bead portions,

the tire further comprises side rubber provided at an outer side in a tire width direction of the carcass in the sidewall portions, and

the rubber composition is used for the side rubber.

[8] The tire according to [6] or [7], wherein

the tire comprises a pair of bead portions, a pair of sidewall portions, a tread portion continuous with both of the sidewall portions, and a carcass including at least one carcass ply extending toroidally between the pair of bead portions,

the tire further comprises a rubber chafer disposed at least in part of a contact portion of the bead portions with a rim, and

the rubber composition is used for the rubber chafer.

(Advantageous Effect)

According to the present disclosure, it is possible to provide a rubber composition capable of suppressing the occurrence of rubber surface roughening during mold vulcanization and contributing to improved sustainability.

Further, according to the present disclosure, it is possible to provide a tire in which rubber surface roughening is suppressed and which can contribute to improved sustainability.

DETAILED DESCRIPTION

Hereinafter, the rubber composition and tire of the present disclosure will be exemplified and described in detail based on embodiments thereof.

(Definitions)

The compounds described in the present specification may be partially or entirely derived from fossil resources, derived from biological resources such as plant resources, or derived from recycled resources such as used tires. Further, they may be derived from a mixture of any two or more of fossil resources, biological resources, and recycled resources.

In the present specification, the "sustainable ratio" refers to the total mass ratio of components derived from biological resources (biomass resources) and components derived from recycled resources in the material of interest.

In the present specification, the aforementioned biological resources (biomass resources) refer to carbon-neutral organic resources derived from living organisms, and include, for example, those stored in the form of starch or cellulose, the bodies of animals that grow by eating plants, and products obtained by processing plants or animals, excluding fossil resources (such as petroleum, coal, natural gas, etc.). The biological resources may be edible or non-edible, but from the viewpoint of not competing with food and effective utilization of resources, non-edible resources are preferred.

Specific examples of the aforementioned biological resources include, for example, cellulose-based crops (pulp, kenaf, wheat straw, rice straw, waste paper, papermaking residues, etc.), wood, charcoal, compost, kitchen waste, plant oil cake, fishery residues, livestock excrement, food waste, sewage sludge, natural rubber, cotton, fats and oils (palm oil, castor oil, cottonseed oil, soybean oil, linseed oil, rapeseed oil, coconut oil, peanut oil, tall oil, corn oil, rice bran oil, safflower oil, sesame oil, olive oil, sunflower oil, palm kernel oil, camellia oil, jojoba oil, macadamia nut oil, tung oil, coconut oil, etc.), carbohydrate-based crops (corn, wheat, rice, rice husk, rice bran, old rice, tubers, buckwheat, cassava, sago palm, sugarcane, etc.), bagasse (i.e., residue after juice extraction from sugarcane), soybeans, okara, essential oils (pine root oil, orange oil, eucalyptus oil, etc.), black liquor from pulp, algae, and the like. As the biological resources, those processed (i.e., substances derived from biological resources) may also be used. Processing methods include, for example, biological processing methods utilizing the action of microorganisms, plants, animals, or their tissue cultures; chemical processing methods utilizing acids, alkalis, catalysts, thermal energy, light energy, etc.; physical processing methods such as micronization, compression, microwave treatment, electromagnetic wave treatment, etc.; and the like. Further, as the biological resources, substances extracted or purified from the aforementioned biological resources or processed biological resources (i.e., substances derived from biological resources) may also be used. For example, sugars, proteins, amino acids, fatty acids, fatty acid esters, etc., purified from the aforementioned biological resources may be used. Examples of the sugars include sucrose, glucose, trehalose, fructose, lactose, galactose, xylose, allose, talose, gulose, altrose, mannose, idose, arabinose, apiose, maltose, cellulose, starch, chitin, etc., derived from biological resources. Examples of the proteins include compounds derived from biological resources in which amino acids (preferably L-amino acids) are linked, and oligopeptides such as dipeptides are also included. Examples of the amino acids include valine, leucine, isoleucine, arginine, lysine, asparagine, glutamine, phenylalanine, etc., derived from biological resources, among which valine, leucine, isoleucine, arginine, and phenylalanine are preferred. The amino acids may be L-amino acids or D-amino acids, but from the viewpoint of abundance in nature and ease of availability, L-amino acids are preferred. Examples of the fatty acids include butyric acid, palmitic acid, stearic acid, oleic acid, linoleic acid, linolenic acid, etc., derived from biological resources. Examples of the fatty acid esters include vegetable oils, animal oils, and modified products of fats and oils derived from biological resources. Various materials and impurities may be mixed in these biological resources.

In the present specification, the aforementioned recycled resources refer to resources obtained by recycling (reprocessing) products that have been used once, collected without being used, or discarded. For example, as recycled resources, resources obtained by recycling (reprocessing) used rubber products such as used tires can be mentioned.

(Rubber Composition)

A rubber composition according to one embodiment of the present disclosure (hereinafter, sometimes referred to as "the rubber composition of the present embodiment") contains a rubber component and carbon black including recovered carbon black. Further, in the present embodiment, the recovered carbon black constitutes a plurality of aggregates in the rubber composition, and in a particle size distribution (particle size distribution A) with carbon black having a diameter of 1.0 $\mu$m or more among the carbon black as a subject, the proportion of particles having a diameter of 5.0 $\mu$m or more is 1% or more, which is a characteristic feature.

In the present specification, "aggregation" refers to a state in which a particle of recovered carbon black is entangled with itself or two or more particles of recovered carbon black are entangled with each other to form a mass, and "aggregate" refers to a mass having a structure in which a particle of recovered carbon black is entangled with itself or a structure in which two or more particles of recovered carbon black are entangled with each other. Such "aggregates" are substantially composed only of recovered carbon black.

In the present specification, "carbon black having a diameter of 1.0 $\mu$m or more" is intended to include carbon black whose primary particle diameter is 1.0 $\mu$m or more, as well as carbon black whose aggregate diameter (secondary particle diameter) is 1.0 $\mu$m or more.

In the present specification, "particle size distribution A with carbon black having a diameter of 1.0 $\mu$m or more among the carbon black as a subject" can be obtained by first measuring the volume-based particle size distribution of all carbon black using a laser diffraction particle size distribution measuring device, and then normalizing the distribution by excluding data for diameters less than 1.0 $\mu$m from the particle size distribution. Such particle size distribution A is, for example, a cumulative distribution.

In the rubber composition of the present embodiment, aggregates composed of recovered carbon black are dispersed, and in the above particle size distribution A, the proportion of particles having a diameter of 5.0 $\mu$m or more is 1% or more. That is, in the rubber composition of the present embodiment, the size of the carbon black including aggregates of recovered carbon black is optimized. When such a rubber composition is vulcanized in a mold, appropriate irregularities are formed on the rubber surface, and the presence of such irregularities facilitates the flow of air. As a result, according to the rubber composition of the present embodiment, the occurrence of surface roughening of the rubber can be significantly suppressed. Furthermore, since the rubber composition of the present embodiment uses recovered carbon black, it can contribute to improved sustainability.

In the particle size distribution A, it is preferable that the proportion of particles having a diameter of 5.0 $\mu$m or more is 10% or more. In this case, surface roughening of the rubber can be further suppressed. From the same viewpoint, the above proportion is more preferably 15% or more, and still more preferably 40% or more. On the other hand, from the viewpoint of fracture properties of the rubber, the above proportion is preferably 80% or less, and more preferably 70% or less.

The adjustment of "the proportion of particles having a diameter of 5.0 $\mu$m or more in particle size distribution A" can be performed, for example, by appropriately controlling the type of recovered carbon black used, the blending amount, the method of kneading, and the like. Further, as the recovered carbon black to be blended into the rubber component, recovered carbon black already containing a predetermined amount of "aggregates having a diameter of 5.0 $\mu$m or more" may be used.

The rubber composition of the present embodiment may contain recovered carbon black that does not constitute aggregates, as long as it contains a plurality of aggregates composed of recovered carbon black.

Next, various materials that may be contained in the rubber composition of the present embodiment will be described.

(Rubber Component)

The rubber composition of the present embodiment contains a rubber component, and the rubber component imparts rubber elasticity to the composition. The rubber component preferably has a sustainable ratio of 30 mass% or more, more preferably 40 mass% or more, still more preferably 50 mass% or more, even more preferably 60 mass% or more, still more preferably 70 mass% or more, further preferably 80 mass% or more, even more preferably 90 mass% or more, and particularly preferably 100 mass%.

As the rubber component, rubber derived from biological resources and rubber derived from recycled resources are preferred. Here, the proportion of monomer components derived from biological resources in 100 mol% of the monomer components constituting the rubber derived from biological resources is preferably 50 mol% or more, more preferably 70 mol% or more, still more preferably 80 mol% or more, even more preferably 90 mol% or more, particularly preferably 95 mol% or more, and may be 100 mol%. Also, the proportion of monomer components derived from recycled resources in 100 mol% of the monomer components constituting the rubber derived from recycled resources is preferably 50 mol% or more, more preferably 70 mol% or more, still more preferably 80 mol% or more, even more preferably 90 mol% or more, particularly preferably 95 mol% or more, and may be 100 mol%.

The rubber component is a component that contributes to crosslinking, and usually has a weight-average molecular weight (Mw) of 10,000 or more, preferably 50,000 or more, more preferably 150,000 or more, still more preferably 200,000 or more, and preferably 5,000,000 or less, more preferably 2,000,000 or less, still more preferably 1,500,000 or less, and even more preferably 1,300,000 or less. In the present specification, the weight-average molecular weight (Mw) of the rubber component can be determined, for example, as a standard polystyrene-equivalent value based on the measured value by gel permeation chromatography (GPC) (GPC-8000 series manufactured by Tosoh Corporation, detector: differential refractometer, column: TSKGEL SUPERMULTIPORE HZ-M manufactured by Tosoh Corporation).

As the rubber component, diene rubber is preferred, and as the diene rubber, isoprene rubber and butadiene rubber are preferred. Here, isoprene rubber refers to rubber containing units derived from isoprene as monomer units, and butadiene rubber refers to rubber containing units derived from butadiene as monomer units.

Examples of the isoprene rubber include natural rubber (NR), synthetic isoprene rubber (IR), modified natural rubber (modified NR), modified natural rubber (modified NR), and modified synthetic isoprene rubber (modified IR). As the natural rubber (NR), for example, generally used types in the tire industry such as RSS #3, TSR20 (for example, SIR20 or STR20), etc., can be used. The origin of the natural rubber (NR) is not particularly limited, and examples include those derived from Hevea brasiliensis, guayule, Russian dandelion, and the like. As the synthetic isoprene rubber (IR), it is not particularly limited, and for example, generally used types in the tire industry such as IR2200 can be used. Examples of modified NR include deproteinized natural rubber (DPNR), high-purity natural rubber (UPNR), and the like. Examples of modified NR include epoxidized natural rubber (ENR), hydrogenated natural rubber (HNR), grafted natural rubber, and the like. Examples of modified IR include epoxidized synthetic isoprene rubber, hydrogenated synthetic isoprene rubber, grafted synthetic isoprene rubber, and the like. These isoprene rubbers may be used alone or in combination of two or more. Among these, NR is preferred as the isoprene rubber.

The isoprene rubber preferably has a sustainable ratio of 30 mass% or more, more preferably 40 mass% or more, still more preferably 50 mass% or more, even more preferably 60 mass% or more, still more preferably 70 mass% or more, further preferably 80 mass% or more, even more preferably 90 mass% or more, and particularly preferably 100 mass%. In order to set the sustainable ratio of the isoprene rubber within the above range, it is preferable to use natural rubber (NR) or to use a polymer synthesized using isoprene derived from biological resources or isoprene derived from recycled resources as monomer components. In this case, the synthesized polymer may be a homopolymer of a monomer derived from biological resources, a homopolymer of a monomer derived from recycled resources, a copolymer of a monomer derived from biological resources and a monomer derived from recycled resources, or a copolymer of a monomer derived from biological resources and/or a monomer derived from recycled resources and a monomer derived from fossil resources (such as petroleum).

Examples of the butadiene rubber include butadiene rubber (BR), aromatic vinyl compound-butadiene copolymer rubber (for example, styrene-butadiene rubber (SBR)), and the like. Here, it is preferable that the butadiene used as a raw material for the butadiene rubber is derived from biological resources or recycled resources.

Examples of the butadiene rubber (BR) include high-cis butadiene rubber, low-cis butadiene rubber, butadiene rubber containing syndiotactic polybutadiene crystals, and the like. Commercial products can be used as the butadiene rubber (BR), and examples of commercial products of such butadiene rubber include products of UBE Elastomer Co., Ltd., ENEOS Materials Corporation, Asahi Kasei Corporation, Zeon Corporation, and the like. These butadiene rubbers may be used alone or in combination of two or more.

Examples of the aromatic vinyl compound-butadiene copolymer rubber (for example, SBR) include emulsion-polymerized aromatic vinyl compound-butadiene copolymer rubber (for example, emulsion-polymerized styrene-butadiene rubber (E-SBR)), solution-polymerized aromatic vinyl compound-butadiene copolymer rubber (for example, solution-polymerized styrene-butadiene rubber (S-SBR)), and the like. In the aromatic vinyl compound-butadiene copolymer rubber, examples of the aromatic vinyl compound (aromatic vinyl monomer) include styrene, vinylnaphthalene, divinylnaphthalene, and the like. These aromatic vinyl compounds may be used alone or in combination of two or more. Among these, styrene is preferred, and styrene derived from biological resources and styrene derived from recycled resources are particularly preferred. That is, SBR is preferred as the aromatic vinyl compound-butadiene copolymer rubber. The styrene may have a substituent. Commercial products can be used as the aromatic vinyl compound-butadiene copolymer rubber, and examples of such commercial products include products of Asahi Kasei Corporation, ENEOS Materials Corporation, Zeon Corporation, Sumitomo Chemical Co., Ltd., and the like. These aromatic vinyl compound-butadiene copolymer rubbers may be used alone or in combination of two or more.

The butadiene rubber preferably has a sustainable ratio of 30 mass% or more, more preferably 40 mass% or more, still more preferably 50 mass% or more, even more preferably 60 mass% or more, still more preferably 70 mass% or more, further preferably 80 mass% or more, even more preferably 90 mass% or more, and particularly preferably 100 mass%. In order to set the sustainable ratio of the butadiene rubber within the above range, for example, it is sufficient to use a polymer synthesized using butadiene derived from biological resources, butadiene derived from recycled resources, aromatic vinyl compounds derived from biological resources (for example, styrene derived from biological resources), or aromatic vinyl compounds derived from recycled resources (for example, styrene derived from recycled resources) as monomer components. In this case, the synthesized polymer may be a homopolymer of a monomer derived from biological resources, a homopolymer of a monomer derived from recycled resources, a copolymer of a monomer derived from biological resources and a monomer derived from recycled resources, or a copolymer of a monomer derived from biological resources and/or a monomer derived from recycled resources and a monomer derived from fossil resources (such as petroleum). It should be noted that the butadiene rubber (B-BR) derived from biological resources (biomass resources) and the aromatic vinyl compound-butadiene copolymer rubber derived from biological resources (for example, styrene-butadiene rubber (B-SBR) derived from biological resources (biomass resources)) include not only rubber obtained by polymerizing butadiene, etc., according to conventional methods, but also rubber obtained by reactions or enzyme reactions by microorganisms, plants, animals, or their tissue cultures (hereinafter also referred to as "microorganisms, etc.").

Further, in order to set the sustainable ratio of the entire rubber component within the above range, it is preferable to use natural rubber (NR) as the rubber component or to use a polymer synthesized using monomer components derived from biological resources or monomer components derived from recycled resources as monomer components.

In general, materials for rubber compositions for tires (rubber and its monomers, fillers, resins, etc.) require large-scale manufacturing equipment for their production, and are therefore usually produced at large factories in specific regions, necessitating significant energy for the storage and transportation of raw materials and products. In contrast, materials derived from biological resources (biomass resources) originate from agricultural products, forests, etc. in each region, and can also be produced on a small scale through microbial fermentation or catalytic reactions, so by utilizing local products and waste, it is possible to reduce the energy required for transportation and storage of raw materials, and furthermore, to reduce the energy required for transportation and storage of the manufactured materials to tire factories, thereby being environmentally friendly. In addition, materials derived from recycled resources can be obtained, for example, by dismantling and pyrolyzing used tires to extract materials constituting the tire, such as rubber, fillers, steel cords, etc. Furthermore, sulfur can be obtained from biological resources or processed products thereof by a method including a desulfurization step for removing sulfur-containing substances from the biological resource or its processed product, a recovery step for recovering sulfur from the desulfurization treatment residue generated in the desulfurization step, and a processing step for processing the recovered sulfur into sulfur for vulcanization (for example, the method described in Japanese Patent Application No. 2022-140390), thereby enabling the acquisition of sulfur from biological resources or processed products thereof, and enabling the acquisition of materials for rubber compositions for tires from various wastes and used articles. In this way, by using sustainable materials (materials derived from biological resources or recycled resources), it is possible to comprehensively reduce environmental impact in tire manufacturing, such as reduction of life cycle carbon dioxide emissions (LCCO2), reduction of life cycle energy consumption (LCE), reduction of life cycle cost (LCC), and reduction of fossil resource usage.

Furthermore, when manufacturing the rubber composition, the ratio of monomer components derived from biological resources, monomer components derived from recycled resources, and monomer components derived from fossil resources (for example, monomer components derived from fossil resources) can be appropriately selected according to the supply situation of biological resources, recycled resources, and fossil resources, and/or market demands (for example, demand for biological resources as food), and by polymerizing monomer components derived from biological resources, monomer components derived from recycled resources, and monomer components derived from fossil resources, it is possible to obtain rubber derived from sustainable materials (materials derived from biological resources or recycled resources) having performance equivalent to that of conventional synthetic rubber. Note that, when using monomer components derived from recycled resources, it may be difficult to separate them from monomer components derived from fossil resources due to reasons in the manufacturing process of the monomer. In such cases, the environmental impact can be evaluated by adopting the concept of mass balance.

The ratio of each monomer unit (for example, units derived from isoprene, units derived from butadiene, units derived from aromatic vinyl compounds) in the entire rubber component can be appropriately adjusted according to the member to which it is applied. The ratio of each monomer unit in the entire rubber component can be adjusted, for example, by appropriately combining the above-described isoprene-based rubber and butadiene-based rubber. In addition, the ratio of cis-bond units among the units derived from butadiene can also be appropriately adjusted according to the member to which it is applied.

In the present specification, the term "monomer unit" means a structural unit of a polymer, "unit derived from isoprene" means a structural unit in a polymer constructed based on isoprene as a monomer (including isoprene units in natural rubber), "unit derived from butadiene" means a structural unit in a polymer constructed based on butadiene as a monomer, and "unit derived from an aromatic vinyl compound" means a structural unit in a polymer constructed based on an aromatic vinyl compound as a monomer.

Further, in the present specification, the ratio of each monomer unit is measured by NMR.

The rubber component may include, in addition to the above-described isoprene-based rubber, butadiene rubber (BR), and aromatic vinyl compound-butadiene copolymer rubber (for example, SBR), diene-based rubbers such as acrylonitrile-butadiene rubber (NBR), chloroprene rubber (CR), butyl rubber (IIR), and styrene-isoprene-butadiene copolymer rubber (SIBR). These rubber components may be used alone or in combination of two or more.

The rubber component may be modified to introduce functional groups that interact with fillers such as carbon black and silica. Examples of such functional groups include amino groups, amide groups, isocyanate groups, imino groups, imidazole groups, urea groups, ammonium groups, imide groups, hydrazo groups, azo groups, diazo groups, carboxyl groups, nitrile groups, pyridyl groups, alkoxy groups, hydroxyl groups, oxy groups, epoxy groups, ether groups, carbonyl groups, oxycarbonyl groups, silyl groups, alkoxy silyl groups, mercapto groups, sulfide groups, disulfide groups, sulfonyl groups, sulfinyl groups, thiocarbonyl groups, and the like, and these functional groups may have substituents. These functional groups may be introduced into the rubber component alone or in combination of two or more. Among these, amino groups, alkoxy groups, and alkoxy silyl groups are preferable, and substituted amino groups in which a hydrogen atom of the amino group is substituted with an alkyl group having 1 to 6 carbon atoms, alkoxy groups having 1 to 6 carbon atoms, and alkoxy silyl groups having 1 to 6 carbon atoms are more preferable.

The functional group may be introduced, for example, by reacting a compound (modifier) having the functional group with the rubber component. The functional group is a modifying functional group having interaction with fillers such as silica and carbon black, and examples include nitrogen-containing functional groups, silicon-containing functional groups, and oxygen-containing functional groups. Examples of compounds (modifiers) having nitrogen-containing functional groups include amino group-containing compounds; examples of compounds (modifiers) having silicon-containing functional groups include silicon halides and hydrocarbyloxy silane compounds; and examples of compounds (modifiers) having oxygen-containing functional groups include alkoxy group-containing compounds, alkylene oxide group-containing compounds, and trialkylsilyloxy group-containing compounds. More specifically, compounds described in International Publication No. 2016/194316 and International Publication No. 2019/117256 can be mentioned. These modifiers may be used alone or in combination of two or more.

The rubber derived from the sustainable material (material derived from biological resources or recycled resources) can be produced, for example, by using monomer components derived from biological resources or monomer components derived from recycled resources, and, if necessary, monomer components derived from fossil resources, in the same manner as the conventional method for producing synthetic rubber derived from fossil resources. In addition, the rubber derived from the sustainable material (particularly, rubber derived from biological resources) can also be obtained by reactions using microorganisms or by enzyme reactions.

As a method for preparing rubber derived from biological resources from the above-described biological resources, for example, the method described in JP 2022-179158 A can be used. For example, by using butadiene obtained from biological resources as a monomer component, butadiene rubber (B-BR) derived from biological resources (biomass resources) can be obtained, and by using styrene obtained from biological resources and butadiene obtained from biological resources as monomer components, styrene-butadiene rubber (B-SBR) derived from biological resources (biomass resources) can be obtained. Here, as methods for obtaining B-BR and B-SBR from biological resources, in addition to artificial polymerization, methods such as polymerization in vivo and polymerization using bio-derived enzymes can be mentioned. The molecular weight, branching, microstructure, etc. of the obtained B-BR and B-SBR can be appropriately adjusted by changing the polymerization conditions according to known methods in accordance with the desired tire performance.

As the butadiene obtained from biological resources, butadiene derived from alkyl alcohols (preferably ethanol and butanol, more preferably butanol), butadiene derived from alkenes (preferably ethylene), and butadiene derived from unsaturated carboxylic acids (preferably tiglic acid) can be suitably used. These butadienes may be used in combination of two or more.

In addition, as the styrene obtained from biological resources, styrene obtained from plants (preferably plants belonging to the Hamamelidaceae, Styracaceae, or Apocynaceae families, more preferably plants belonging to the Liquidambar, Styrax, or Catharanthus genera, and even more preferably Liquidambar styraciflua, Styrax japonicus, or Catharanthus roseus), and styrene obtained from microorganisms (preferably microorganisms belonging to the Penicillium or Escherichia genera, more preferably P. citrinum or transformed E. coli) can be suitably used. These styrenes may also be used in combination of two or more.

Recently, biomass complexes centered on bioethanol and bioethylene are being planned, but bioethanol and bioethylene are produced mainly using saccharides and/or cellulose as biological resources, and cannot effectively utilize other biological resources such as proteins, lipids, and amino acids. Furthermore, saccharides compete with food, and excessive use of cellulose leads to deforestation. Therefore, in addition to the supply situation of various biological resources, the supply situation of recycled resources, the supply situation of fossil resources, and market demands (for example, demand for biomass resources as food), it is preferable to use a plurality of types of monomer components derived from biological resources as the monomer components derived from biological resources, or to use monomer components derived from biological resources, monomer components derived from recycled resources, and monomer components derived from fossil resources in combination, and further to appropriately adjust the ratio of these monomer components for use. In this way, it is possible to effectively utilize a wide range of biological resources such as sugars, proteins, and lipids, as well as recycled resources, without relying on a single type of biological resource, to stably supply rubber derived from sustainable materials, and furthermore, to take environmental considerations into account according to the situation during production.

When using a plurality of types of monomer components derived from biological resources, it is preferable to use monomer components derived from different biological resources, that is, monomer components obtained from different biological resources. Specifically, as the butadiene derived from biological resources, it is preferable to use a mixture of a plurality of types of butadiene derived from different biological resources, and/or as the styrene derived from biological resources, it is preferable to use a mixture of a plurality of types of styrene derived from different biological resources. In this way, it is possible to effectively utilize a plurality of types of biological resources.

(Recovered Carbon Black)

The rubber composition of the present embodiment contains recovered carbon black. In addition, the recovered carbon black constitutes a plurality of aggregates in the rubber composition.

In the present specification, "recovered carbon black" refers to carbon black obtained by recovering it from waste materials subjected to recycling. Examples of the waste materials include waste rubber, used tires, waste oil, and the like. Waste rubber refers to all discarded rubber, not limited to that generated from rubber products, but also including unnecessary scraps generated during the production or repair of rubber products. Examples of scraps include buffing dust and peeling rubber. Buffing dust is, for example, fine rubber generated in the buffing process of retreading tires, in which the tread portion remaining on the base tire is shaved off. Peeling rubber is, for example, long rubber strips with a width of about 1 to 2 cm, stripped from the surface of rubber products such as tires. Peeling rubber is generated by shaving the surface of rubber products such as tires using a knife with a U-shaped or V-shaped tip as a peeler. Waste rubber includes not only crosslinked rubber but also unvulcanized rubber. Rubber products include, for example, final products such as tires and rubber hoses, as well as rubber components or parts in the manufacturing stage of final products. Used tires may be those subjected to retreading, or may be waste tires generated by tire replacement, vehicle scrapping, or the like, and ELT (End-of-Life Tire) that has reached the end of its life as a tire, or any other tires discarded for any reason. Waste oil is not limited to that generated by decomposing plastics or rubber, but also includes, for example, used oils discharged from industry, such as animal and vegetable oils, lubrication oil, insulating oil, cutting oil, and the like. Among these, as waste oil, it is preferable to use those that do not contain components other than organic substances, such as those derived from silicone rubber or polyvinyl chloride. It is also preferable that the waste oil contains carbon black or rubber containing carbon black.

"Recovered carbon black" is different from carbon black directly produced from hydrocarbons such as petroleum, natural gas, or coal, that is, carbon black that is not a recycled product. Note that "used" here includes not only those actually used and then discarded, but also those manufactured but discarded without actual use.

Furthermore, it is preferable that the recovered carbon black used in the present embodiment is obtained by pyrolysis of a vulcanized rubber product containing carbon black. The recovered carbon black obtained by the above pyrolysis tends to have a high proportion of aggregates with a diameter of 5.0 $\mu$m or more, and therefore, by using such recovered carbon black, the rubber composition of the present embodiment can be more easily obtained. Furthermore, it is preferable that the recovered carbon black used in the present embodiment is obtained from the solid residue generated by pyrolysis of a vulcanized rubber product containing carbon black. When a rubber product containing carbon black is pyrolyzed, a solid residue and volatile components (oil) are obtained, and recovered carbon black can be recovered from either. When recovering carbon black from the volatile components, it is possible to recover oil components with a specific gravity suitable for producing carbon black and use them to produce carbon black by an existing carbon black production method (for example, Japanese Patent Publication No. 2015-520259). In this case, unlike carbon black recovered from solid residue, there are advantages such as the absence of impurities and no mixing of different grades. In addition, in the production of low environmental impact carbon black, there are various options such as using, in addition to oil obtained by recovering volatile components obtained by the above-mentioned rubber pyrolysis, vegetable oil, oil derived from waste plastics, and the like. However, edible resources such as vegetable oil have issues in securing a sufficient amount due to demand for other uses such as food, and it is also necessary to consider the environmental impact associated with the expansion of cultivated land. Also, oil derived from waste plastics, etc., is used for other purposes such as horizontal recycling of plastics, so there are also supply issues. On the other hand, when using volatile components (oil) generated by pyrolysis of vulcanized rubber products, especially tires, it is possible to continue using existing materials within the tire industry, thereby reducing the consumption of new materials in new tire production and contributing to the reduction of environmental impact as an industry. The grade of the carbon black is not particularly limited, and examples include N134, N110, N220, N234, N219, N339, N330, N326, N351, N550, N762, and the like.

The solid residue obtained by pyrolyzing waste such as used rubber and used tires contains, in addition to carbon black, ash. The ash is derived from non-volatile components contained in the rubber or tire. Therefore, the recovered carbon black obtained from the solid residue has a relatively low carbon black content. On the other hand, considering the various physical properties required for tires produced using recovered carbon black, the higher the carbon content in the recovered carbon black, the more preferable. In the recovered carbon black used in the present embodiment, the carbon content is preferably 75 mass% or more, more preferably 80 mass% or more, even more preferably 87 mass% or more, and still more preferably 89 mass% or more. The carbon content in the recovered carbon black used in the present embodiment is preferably 97 mass% or less. Note that the carbon content is a value excluding adsorbed moisture.

The ash specifically includes zinc oxide, zinc sulfide, silica, iron compounds (iron oxide), calcium oxide, aluminum oxide, magnesium oxide, and the like. In the case of recovered carbon black produced from solid residue obtained by pyrolyzing waste, even if various processes for removing ash are performed, a certain amount of ash remains. In the present embodiment, the inclusion of ash in the recovered carbon black is permitted. The lower limit of the ash content in the recovered carbon black used in the present embodiment may be 0.5 mass%. On the other hand, considering the various physical properties required for tires, the quality of the recovered carbon black, etc., the ash content in the recovered carbon black is preferably 25 mass% or less, more preferably 15 mass% or less, and even more preferably 5.0 mass% or less.

Here, in the present specification, the ash content of carbon black is determined in accordance with ASTM D8474 and D1506.

Furthermore, the recovered carbon black can be obtained from the pyrolysis process of used pneumatic tires. For example, European Patent Application Publication No. 3427975 refers to "Rubber Chemistry and Technology," Vol. 85, No. 3, pp. 408-449 (2012), particularly pp. 438, 440, and 442, and describes that it can be obtained by pyrolysis of organic materials at 550-800°C in the absence of oxygen, or by vacuum pyrolysis at relatively low temperatures ([0027]). As mentioned in [0004] of Japanese Patent No. 6856781, the carbon black obtained from such a pyrolysis process generally lacks functional groups on its surface (Comparison of surface morphology and chemistry of pyrolytic carbon black and commercial carbon black, Powder Technology 160 (2005) 190-193).

The recovered carbon black may lack functional groups on its surface, or may be treated to include functional groups on its surface. The treatment to include functional groups on the surface of the recovered carbon black can be carried out by conventional methods. For example, European Patent Application Publication No. 3173251 discloses that carbon black obtained from a pyrolysis process is treated with potassium permanganate under acidic conditions to obtain carbon black containing hydroxyl and/or carboxyl groups on its surface. In addition, Japanese Patent No. 6856781 discloses that carbon black obtained from a pyrolysis process is treated with an amino acid compound containing at least one thiol group or disulfide group to obtain carbon black with an activated surface. The recovered carbon black according to the present embodiment also includes carbon black that has been treated to include such functional groups on its surface.

As the pyrolysis of crosslinked rubber products (vulcanized rubber products) such as used tires, for example, a pyrolysis method at a temperature of 650°C or higher can be mentioned.

Regarding the crosslinked rubber products used for decomposition, it is possible to group them in advance according to the type of rubber component compounded, and then carry out the decomposition process for each group. Alternatively, it is possible to group them in advance according to the type of filler compounded (for example, type of carbon black, type of silica, mixing ratio of carbon black and silica, etc.), and then carry out the decomposition process for each group. Furthermore, it is also possible to perform both grouping by type of rubber component and grouping by type of filler, and then carry out the decomposition process for each group. When the decomposition process is performed for each group in this way, recovered carbon black with more uniform physical properties can be obtained, and when it is compounded again into a rubber component, a rubber composition with better performance can be obtained.

Furthermore, when the crosslinked rubber product used for decomposition is derived from a tire, it is possible to group them in advance by tire type (for example, for passenger vehicles, for trucks and buses, for large vehicles such as off-road vehicles, for aircraft, for agricultural vehicles, etc.), and then carry out the decomposition process for each group. Alternatively, it is possible to group them in advance by tire component (for example, tread rubber, sidewall rubber, bead portion rubber, steel cord coating rubber, organic fiber coating rubber, pad rubber, cushion rubber, etc.), and then carry out the decomposition process for each group. Furthermore, it is also possible to perform both grouping by tire type and grouping by tire component, and then carry out the decomposition process for each group. When the decomposition process is performed for each group in this way, recovered carbon black with more uniform physical properties can be obtained, and when it is compounded again into a rubber component, a rubber composition with better performance can be obtained.

The recovered carbon black used in the present embodiment preferably has a nitrogen adsorption specific surface area ($N_2SA$) by the BET method of 40-100 $m^2$/g, more preferably 50-90 $m^2$/g, and particularly preferably 55-75 $m^2$/g. The DBP oil absorption is preferably 70-120 mL/100 g, more preferably 75-110 mL/100 g, and particularly preferably 80-100 mL/100 g. The recovered carbon black in the present embodiment may be a commercially available product, and as such a commercial product, for example, the product name "PB365" manufactured by Enrestec Co., Ltd. can be mentioned. PB365 is recovered carbon black produced through pyrolysis of used tires, and its $N_2SA$ by the BET method is 73.6 $m^2$/g. In addition, PB365 contains about 17 mass% ash content.

In the present specification, the nitrogen adsorption specific surface area ($N_2SA$) of carbon black by the BET method is the statistical thickness specific surface area (STSA) and is determined according to ASTM D6556. Further, in the present specification, the DBP oil absorption of carbon black is determined according to ASTM D2414.

The recovered carbon black preferably has a pH of 4-12, more preferably 5-11, and particularly preferably 6-10.

Here, in the present specification, the pH of the recovered carbon black is determined according to ASTM D1512.

The recovered carbon black preferably has a toluene discoloration transmittance of 60% or more, more preferably 70% or more, and particularly preferably 80% or more.

Here, in the present specification, the toluene discoloration transmittance of the recovered carbon black is determined according to ASTM D1618.

The recovered carbon black preferably has a heating loss at 125°C of 3 mass% or less, more preferably 2.5 mass% or less, and particularly preferably 2 mass% or less.

Here, in the present specification, the heating loss at 125°C of the recovered carbon black is determined according to ASTM D1509.

The recovered carbon black preferably has a sulfur content of 5 mass% or less, more preferably 3.5 mass% or less, and particularly preferably 3 mass% or less.

The recovered carbon black preferably has a 35 mesh sieve residue of 20 mass ppm or less, more preferably 15 mass ppm or less, and particularly preferably 10 mass ppm or less.

Here, in the present specification, the 35 mesh sieve residue of the recovered carbon black is determined according to ASTM D1514.

The recovered carbon black preferably has a 325 mesh (44 $\mu$m) sieve residue of 1000 mass ppm or less, more preferably 700 mass ppm or less, and particularly preferably 300 mass ppm or less.

Here, in the present specification, the 325 mesh (44 $\mu$m) sieve residue of the recovered carbon black is determined according to ASTM D1514.

The recovered carbon black preferably has a pellet hardness of 100 cN or less, more preferably 90 cN or less, and particularly preferably 80 cN or less.

Here, in the present specification, the pellet hardness of the recovered carbon black is determined according to ASTM D5230.

The recovered carbon black preferably has a pellet fines content of 10 mass% or less, more preferably 7 mass% or less, and particularly preferably 5 mass% or less.

Here, in the present specification, the pellet fines content of the recovered carbon black is determined according to ASTM D1508.

The recovered carbon black preferably has a particle size (D97) of 25 $\mu$m or less, more preferably 15 $\mu$m or less, and particularly preferably 10 $\mu$m or less.

Here, in the present specification, the particle size (D97) of the recovered carbon black is determined using a laser diffraction particle size distribution analyzer, with a refractive index of 1.33 for water and 1.75 for the filler.

The recovered carbon black preferably has a proportion of particles of 5 $\mu$m or less of 50 vol% or more, more preferably 70 vol% or more, and particularly preferably 80 vol% or more.

The recovered carbon black preferably has a compressed dibutyl phthalate (24M4DBP) absorption of 50-110 mL/100 g, more preferably 60-100 mL/100 g, and particularly preferably 70-90 mL/100 g.

Here, in the present specification, the 24M4DBP absorption of the recovered carbon black is determined according to ASTM D3493.

The content of the recovered carbon black in the rubber composition of the present embodiment is not particularly limited, but is preferably 2 parts by mass or more, and also preferably 100 parts by mass or less, per 100 parts by mass of the rubber component. By setting the content of the recovered carbon black to 2 parts by mass or more, the occurrence of rubber surface roughening can be more reliably suppressed, and further, the improvement of sustainability can be further contributed to. In addition, by setting the content of the recovered carbon black to 100 parts by mass or less, the various properties such as the elastomeric properties and durability inherent to the rubber component can be sufficiently exhibited. From the same viewpoint, the content of the recovered carbon black per 100 parts by mass of the rubber component is more preferably 5 parts by mass or more, further preferably 10 parts by mass or more, and also more preferably 80 parts by mass or less, and further preferably 50 parts by mass or less.

(Carbon Black Other Than Recovered Carbon Black)

The rubber composition of the present embodiment may further contain, in addition to the above-described recovered carbon black, carbon black other than recovered carbon black (virgin carbon black). As the carbon black other than recovered carbon black, plant-derived carbon black can be mentioned, and as plant-derived carbon black, for example, those derived from castor oil or tall oil can be mentioned.

The grade of the carbon black is not particularly limited, and examples include N134, N110, N220, N234, N219, N339, N330, N326, N351, N550, N762, and the like. Commercially available products can be used as the carbon black, and as commercial products of such carbon black, products from Asahi Carbon Co., Ltd., Cabot Japan K.K., Tokai Carbon Co., Ltd., Mitsubishi Chemical Corporation, Lion Corporation, Nippon Steel Carbon Co., Ltd., Birla Carbon, and the like can be used. These carbon blacks may be used alone or in combination of two or more.

The nitrogen adsorption specific surface area ($N_2SA$) of the carbon black is not particularly limited, and can be appropriately adjusted, for example, according to the tire category, tire component, target performance, etc. For example, the nitrogen adsorption specific surface area ($N_2SA$) of the carbon black is preferably $20 \, m^2/g$ or more, more preferably $50 \, m^2/g$ or more, still more preferably $70 \, m^2/g$ or more, even more preferably $90 \, m^2/g$ or more, and preferably $200 \, m^2/g$ or less, more preferably $150 \, m^2/g$ or less, and even more preferably $130 \, m^2/g$ or less.

The content of the carbon black is not particularly limited, and can be appropriately adjusted, for example, according to the tire category, tire component, target performance, etc. However, from the viewpoint of forming aggregates by recovered carbon black as desired in the rubber composition of the present embodiment, it is preferable that carbon black other than recovered carbon black is not contained. This is because, in general, the primary particle diameter of virgin carbon black, or the diameter of aggregates that can be formed by virgin carbon black, tends to be relatively small.

(Silica)

The rubber composition of the present embodiment may contain silica. Examples of such silica include wet silica (hydrous silicate), dry silica (anhydrous silicate), calcium silicate, aluminum silicate, and the like, and among these, wet silica is preferred due to its high content of silanol groups. These silicas may be used alone or in combination of two or more. Commercially available products can be used as the silica, and as commercial products of such silica, products from Tosoh Silica Corporation, Evonik, Solvay, Solvay Japan K.K., Tokuyama Corporation, and the like can be used.

From the viewpoint of reducing environmental impact, plant-derived silicate silica is preferred as the silica. Such plant silicates are present, for example, in bryophytes, ferns, horsetails, Cucurbitaceae, Urticaceae, Poaceae plants, and the like. Among these plants, Poaceae plants are preferred. As Poaceae plants, rice, bamboo, sugarcane, and the like can be mentioned, and among these, rice is preferred. Since rice is widely cultivated for food, it can be locally procured in a wide area, and since rice husks are generated in large quantities as industrial waste, it is easy to secure the quantity. Therefore, from the viewpoint of ease of procurement, silica derived from rice husks (hereinafter also referred to as "rice husk silica") is particularly preferred as the silica. By using such rice husk silica, rice husks, which are industrial waste, can be effectively utilized, and since raw materials can be locally procured near the tire manufacturing plant, energy and cost for transportation and storage can be reduced, and from various viewpoints, it is environmentally preferable. The rice husk silica may be a powder of rice husk charcoal obtained by carbonizing rice husks by heating, or may be precipitated silica produced by preparing an alkali silicate aqueous solution by extracting rice husk ash generated when rice husks are burned as fuel in a biomass boiler with alkali, and producing by a wet process using the alkali silicate aqueous solution. The method for producing the rice husk charcoal is not particularly limited, and various known methods can be used, for example, rice husk charcoal can be obtained by pyrolyzing rice husks by steaming in a kiln. The rice husk charcoal thus obtained can be pulverized using a known pulverizer (for example, a ball mill), and a powder of rice husk charcoal can be obtained by classifying and sorting to a predetermined particle size range. In addition, the above-mentioned rice husk-derived precipitated silica can be produced by the method described in JP 2019-38728 A.

As the silica, further, silica produced by recycling silicon components from silicon wafer scraps used as raw materials for semiconductors, glass bottles, and the like can also be mentioned.

The silica preferably has a nitrogen adsorption specific surface area ($N_2SA$) of $50 \, m^2/g$ or more, more preferably $100 \, m^2/g$ or more, still more preferably $150 \, m^2/g$ or more, and also preferably $350 \, m^2/g$ or less, more preferably $250 \, m^2/g$ or

less, still more preferably 230 m$^2$/g or less, and even more preferably 200 m$^2$/g or less.

In the present specification, the nitrogen adsorption specific surface area (N$_2$SA) of silica is a value measured by the BET method in accordance with ASTM D3037-93.

The content of the silica can be appropriately adjusted, for example, according to the tire category, tire component, target performance, etc. For example, the content of silica is preferably 5 parts by mass or more, more preferably 10 parts by mass or more, still more preferably 30 parts by mass or more, still more preferably 50 parts by mass or more, still more preferably 70 parts by mass or more, even more preferably 80 parts by mass or more, still more preferably 100 parts by mass or more, particularly preferably 110 parts by mass or more, and also preferably 300 parts by mass or less, more preferably 200 parts by mass or less, still more preferably 180 parts by mass or less, and particularly preferably 150 parts by mass or less, per 100 parts by mass of the rubber component.

The proportion of silica in the total content of silica and carbon black is not particularly limited, and can be appropriately adjusted, for example, according to the tire category, tire component, target performance, etc. For example, in the case of tread rubber for passenger vehicle tires, the proportion of silica in the total content of silica and carbon black is preferably 50 mass% or more, more preferably 70 mass% or more, still more preferably 80 mass% or more, even more preferably 90 mass% or more, and particularly preferably 95 mass% or more. The proportion of silica in the total content of silica and carbon black may be 100 mass%, but is preferably 98 mass% or less.

(Silane coupling agent)

When the rubber composition of the present embodiment contains silica, it is preferable that the rubber composition further contains a silane coupling agent in order to enhance the effect of the silica. Examples of such silane coupling agents include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide, 3-trimethoxysilylpropyl methacrylate monosulfide, bis(3-dimethoxymethylsilylpropyl)tetrasulfide, 3-mercaptopropyldimethoxymethylsilane, dimethoxymethylsilylpropyl-N,N-dimethylthiocarbamoyltetrasulfid e, dimethoxymethylsilylpropylbenzothiazolyltetrasulfide, and the like. Commercially available products can be used as the silane coupling agent, and as commercial products of such silane coupling agents, products from Evonik, Momentive, Shin-Etsu Silicone Co., Ltd., Dow Corning Toray Co., Ltd., Tokyo Chemical Industry Co., Ltd., Azumax Co., Ltd., and the like can be used. These silane coupling agents may be used alone or in combination of two or more.

The content of the silane coupling agent can be appropriately adjusted, for example, according to the applicable tire category, tire member, target performance, and the like. For example, the content of the silane coupling agent is preferably 1 part by mass or more, more preferably 6 parts by mass or more, still more preferably 8 parts by mass or more, and preferably 20 parts by mass or less, more preferably 15 parts by mass or less, still more preferably 12 parts by mass or less, and even more preferably 10 parts by mass or less, per 100 parts by mass of the silica.

It is also possible to use bioethanol as a raw material for the silane coupling agent. Bioethanol is mainly produced using saccharides and/or cellulose as biological resources, and other biological resources such as proteins, lipids, and amino acids cannot be effectively utilized. Furthermore, saccharides compete with food, and excessive use of cellulose leads to deforestation. Therefore, in addition to the supply situation of various biological resources, it is preferable to use a plurality of types of monomer components derived from biological resources, or to use a combination of monomer components derived from biological resources, recycled resources, and fossil resources, according to the supply situation of recycled resources, the supply situation of fossil resources, and market demands (for example, demand for biomass resources as food). In this way, it is possible to effectively utilize a wide range of biological resources such as saccharides, proteins, and lipids, as well as recycled resources, without relying on a single biological resource, and to take environmental considerations into account according to the situation during production.

(Rubber Powder)

The rubber composition of the present embodiment preferably contains rubber powder. In this case, the occurrence of rubber surface roughening can be further suppressed.

It should be noted that, in the present specification, rubber powder is, by definition, not included in the above-described "rubber component."

The rubber powder may be obtained by pulverizing used rubber products such as used tires, and, as desired, removing reinforcing members such as steel materials and fibers, dust, glass, sand, stones, and the like, or by preparing a newly vulcanized rubber composition for the purpose of manufacturing rubber powder and pulverizing it. For example, rubber powder can be obtained from vulcanized rubber by the method described in "Rubber Chemistry And Technology." In the process of obtaining rubber powder by pulverizing vulcanized rubber, mechanical treatment or low-temperature treatment may be used. For example, in mechanical treatment, various crushing devices such as cracker mills and granulators can be used to mechanically pulverize vulcanized rubber into fine particles. In low-temperature treatment, finely chopped vulcanized rubber is frozen at extremely low temperatures and then pulverized into fine particles. For removal of steel materials, a magnetic separator or the like can be used, and for removal of fibers, an air separator or the like can be used. Commercially available products can also be used as the rubber powder, and examples of commercially available rubber powder include products from Global Corporation or Nantong Huili Rubber Corporation. From the viewpoint of reducing environmental impact, it is preferable to use rubber powder obtained by pulverizing used rubber products such as used tires. The rubber powder may be used alone or in combination of two or more types.

The composition of the rubber powder is not particularly limited and depends on the composition of the vulcanized rubber of the used rubber product (used tire) serving as the raw material. In one embodiment, the rubber powder contains a rubber component, carbon black, silica, and the like. The rubber component, carbon black, silica, and the like contained in the rubber powder may be the same as or different from the rubber component, carbon black, silica, and the like contained in the rubber composition of the present embodiment described above.

The rubber powder preferably has a volume-average particle diameter of 1000 $\mu$m or less, more preferably 500 $\mu$m or less, still more preferably 200 $\mu$m or less, and even more preferably 100 $\mu$m or less. The smaller the volume-average particle diameter of the rubber powder, the better, and the lower limit is not particularly limited.

In the present specification, the volume-average particle diameter is measured using a laser diffraction particle size distribution measuring device, and can be measured, for example, using "CAPA500" manufactured by HORIBA, Ltd.

The rubber powder preferably has a 60-mesh sieve residue of less than 1 mass%, more preferably 0.5 mass% or less, still more preferably 0.1 mass% or less, and the lower limit is not particularly limited. The rubber powder preferably has an 80-mesh sieve residue of less than 10 mass%, more preferably 1 mass% or less, still more preferably 0.5 mass% or less, and the lower limit is not particularly limited.

In the present specification, the sieve residue is measured in accordance with ASTM D5644-01.

The rubber powder preferably has an acetone extract content of 12 mass% or less, more preferably 11 mass% or less, still more preferably 10 mass% or less, and preferably 1 mass% or more, more preferably 2 mass% or more, and still more preferably 3 mass% or more.

In the present specification, the acetone extract content in the rubber powder refers to the acetone extract content (%) determined by the acetone extraction method in accordance with JIS K6350.

The content of the rubber powder is not particularly limited and can be appropriately adjusted, for example, according to the applicable tire category, tire member, target performance, and the like. For example, the content of the rubber powder is preferably 1 part by mass or more, more preferably 2 parts by mass or more, still more preferably 3 parts by mass or more, and preferably 200 parts by mass or less, more preferably 150 parts by mass or less, more preferably 100 parts by mass or less, more preferably 50 parts by mass or less, more preferably 30 parts by mass or less, still more preferably 15 parts by mass or less, even more preferably 10 parts by mass or less, and particularly preferably 5 parts by mass or less, per 100 parts by mass of the rubber component.

(Recovered Rubber)

The rubber composition of the present embodiment preferably contains recovered rubber (also referred to as "reclaim rubber"). In this case, the occurrence of rubber surface roughening can be further suppressed.

It should be noted that, in the present specification, recovered rubber is, by definition, not included in the above-described "rubber component." Also, recovered rubber is typically recovered rubber that has undergone desulfurization treatment, and, by definition, is not included in the above-described "rubber powder."

Commercially available recovered rubber can be used as the recovered rubber. Recovered rubber refers to rubber obtained by recovering used rubber such as used rubber from automotive tires, tubes, and other rubber products as defined in JIS K6313-2012, as well as those having equivalent properties, excluding powdered forms.

The type of recovered rubber may be any selected from tube recovered rubber, tire recovered rubber, and other recovered rubbers, and a combination of a plurality of types may also be used. Among these, tire recovered rubber is preferred. The method for producing recovered rubber is not particularly limited, and known methods such as the oil pan method and the reclaimer method may be employed.

The content of the recovered rubber is not particularly limited and can be appropriately adjusted, for example, according to the applicable tire category, tire member, target performance, and the like. For example, the content of the recovered rubber is preferably 1 part by mass or more, more preferably 2 parts by mass or more, still more preferably 3 parts by mass or more, and preferably 100 parts by mass or less, more preferably 75 parts by mass or less, more preferably 50 parts by mass or less, more preferably 20 parts by mass or less, even more preferably 10 parts by mass or less, and particularly preferably 5 parts by mass or less, per 100 parts by mass of the rubber component.

(Resin)

The rubber composition of the present embodiment may contain a resin. Examples of such resins include terpenic resins, rosin-based resins, $C_5$ resins, $C_5$-$C_9$ resins, $C_9$ resins, cyclopentadiene resins, aromatic resins, coumarone resins, indene resins, coumarone-indene resins, olefin resins, polyurethane resins, acrylic resins, and the like. These resins may be used alone or in combination of two or more types. Among these resins, terpenic resins, rosin-based resins, $C_5$ resins, $C_5$-$C_9$ resins, $C_9$ resins, cyclopentadiene resins, and aromatic resins are preferred, and terpenic resins and rosin-based resins are particularly preferred. Since terpenic resins and rosin-based resins are sustainable resins of natural origin, they can further reduce environmental impact and further improve tire performance such as gripping performance on various road surface conditions including dry road surfaces, wet road surfaces, snow-covered road surfaces, and icy road surfaces. In addition, $C_5$ resins, $C_9$ resins, $C_5$-$C_9$ resins, and cyclopentadiene resins can improve wear resistance and high fuel efficiency in a well-balanced manner. Furthermore, aromatic resins can improve gripping performance, wear resistance, and rubber strength in a well-balanced manner.

The resin may be hydrogenated, that is, it may be a hydrogenated resin. The resin may also have functional groups introduced by modification that interact with fillers such as carbon black and silica. Examples of such functional groups include amino groups, amide groups, isocyanate groups, imino groups, imidazole groups, urea groups, ammonium groups, imide groups, hydrazo groups, azo groups, diazo groups, carboxyl groups, nitrile groups, pyridyl groups, alkoxy groups, hydroxyl groups, oxy groups, epoxy groups, ether groups, carbonyl groups, oxycarbonyl groups, silyl groups, alkoxy silyl groups, mercapto groups, sulfide groups, disulfide groups, sulfonyl groups, sulfinyl groups, thiocarbonyl groups, and the like.

The terpenic resin is a solid resin obtained by compounding turpentine oil, which is obtained simultaneously with rosin from pine trees, or a polymerized component separated therefrom, and polymerizing it using a Friedel-Crafts catalyst, and includes β-pinene resins, α-pinene resins, and the like. The terpenic resin also encompasses terpenic-aromatic compound resins, and representative examples of such terpenic-aromatic compound resins include terpenic-phenol resins and styrene-terpene resins. The terpenic-phenol resin can be obtained by reacting terpenes and various phenols using a Friedel-Crafts catalyst, or further condensing with formalin. The styrene-terpene resin can be obtained by reacting styrene and terpenes using a Friedel-Crafts catalyst. There is no particular limitation on the terpenes used as raw materials, but monoterpene hydrocarbons such as α-pinene and limonene are preferred, those containing α-pinene are more preferred, and α-pinene is particularly preferred.

Examples of the rosin-based resin include, as natural resin rosin, gum rosin, tall oil rosin, wood rosin, and the like contained in raw rosin and tall oil, and as modified rosin, rosin derivatives, and modified rosin derivatives, for example, polymerized rosin, partially hydrogenated rosin thereof; glycerin ester rosin, partially hydrogenated rosin or completely hydrogenated rosin thereof; pentaerythritol ester rosin, partially hydrogenated rosin or polymerized rosin thereof; and the like.

Examples of the $C_5$ resin include aliphatic petroleum resins obtained by (co)polymerizing $C_5$ fractions obtained by thermal cracking of naphtha in the petrochemical industry. The $C_5$ fraction usually contains olefinic hydrocarbons such as 1-pentene, 2-pentene, 2-methyl-1-butene, 2-methyl-2-butene, 3-methyl-1-butene, and diolefinic hydrocarbons such as 2-methyl-1,3-butadiene, 1,2-pentadiene, 1,3-pentadiene, 3-methyl-1,2-butadiene, and the like.

The $C_5$-$C_9$ resin refers to a $C_5$-$C_9$ synthetic petroleum resin, and examples of the $C_5$-$C_9$ resin include solid polymers obtained by polymerizing petroleum-derived $C_5$-$C_{11}$ fractions using Friedel-Crafts catalysts such as $AlCl_3$ and $BF_3$, and more specifically, copolymers mainly composed of styrene, vinyltoluene, α-methylstyrene, indene, and the like. As the $C_5$-$C_9$ resin, a resin with a low content of $C_9$ or higher components is preferred from the viewpoint of compatibility with the rubber component. Here, "low content of $C_9$ or higher components" means that the content of $C_9$ or higher components in the total resin is less than 50 mass%, preferably 40 mass% or less.

The $C_9$ resin refers to a $C_9$ synthetic petroleum resin, and refers to a solid polymer obtained by polymerizing $C_9$ fractions using a Friedel-Crafts catalyst such as $AlCl_3$ or $BF_3$. Examples of the $C_9$ resin include copolymers mainly composed of indene, α-methylstyrene, vinyltoluene, and the like.

The cyclopentadiene resin refers to a resin containing units derived from cyclopentadiene monomers as monomer units. Examples of such cyclopentadiene resins include homopolymers of cyclopentadiene monomers, copolymers of two or more cyclopentadiene monomers, copolymers of cyclopentadiene monomers and other monomers, and the like. Examples of cyclopentadiene monomers include cyclopentadiene, dicyclopentadiene, tricyclopentadiene, and the like, among which dicyclopentadiene is preferred, that is, as the cyclopentadiene resin, dicyclopentadiene resin is preferred. The dicyclopentadiene resin refers to a resin obtained by polymerizing dicyclopentadiene using, for example, a Friedel-Crafts catalyst such as $AlCl_3$ or $BF_3$. Examples of the dicyclopentadiene resin include homopolymers of dicyclopentadiene, copolymers of dicyclopentadiene and aromatic monomers, copolymers of dicyclopentadiene and $C_9$ fractions (vinyltoluene, indene, etc.), and the like.

The aromatic resin refers to a resin containing units derived from aromatic monomers as monomer units. Examples of such aromatic resins include homopolymers of aromatic monomers, copolymers of two or more aromatic monomers, copolymers of aromatic monomers and other monomers, and the like. Examples of aromatic monomers include styrenic monomers such as styrene, o-methylstyrene, m-methylstyrene, p-methylstyrene, $\alpha$-methylstyrene, p-methoxystyrene, p-tert-butylstyrene, o-chlorostyrene, m-chlorostyrene, p-chlorostyrene, p-phenylstyrene; phenolic monomers such as phenol, alkylphenol, alkoxyphenol; naphtholic monomers such as naphthol, alkylnaphthol, alkoxynaphthol; and the like.

The resin preferably has a softening point of 30°C or higher, more preferably 60°C or higher, still more preferably 80°C or higher, more preferably higher than 110°C, more preferably 116°C or higher, more preferably 120°C or higher, more preferably 123°C or higher, and still more preferably 127°C or higher. From the viewpoint of processability, the resin preferably has a softening point of 160°C or lower, more preferably 150°C or lower, still more preferably 145°C or lower, more preferably 141°C or lower, and still more preferably 136°C or lower.

In the present specification, the softening point of the resin is measured using a ring-and-ball softening point measuring device as specified in JIS K 6220-1:2015 (ISO 28641:2010), and is the temperature at which the ball drops.

Commercially available products can be used as the resin, and examples of commercially available resins include products from ENEOS Corporation, Arakawa Chemical Industries, Ltd., ExxonMobil Corporation, Quintone, Yasuhara Chemical Co., Ltd., Maruzen Petrochemical Co., Ltd., Sumitomo Bakelite Co., Ltd., Tosoh Corporation, Rutgers Chemicals, BASF, Clayton Polymer, Nitto Chemical Industry Co., Ltd., Nippon Shokubai Co., Ltd., Taoka Chemical Co., Ltd., and the like.

The content of the resin is not particularly limited and can be appropriately adjusted, for example, according to the applicable tire category, tire member, target performance, and the like. For example, the content of the resin is preferably in the range of 5 to 100 parts by mass, and more preferably in the range of 10 to 60 parts by mass, per 100 parts by mass of the rubber component.

(Liquid Softener)

The rubber composition of the present embodiment may contain a liquid softener. Here, "liquid softener" refers to a compounding agent that is liquid at 25°C (room temperature) and has the function of softening the rubber composition. The liquid softener is not particularly limited, and examples include oils, liquid polymers, and the like, among which oils are preferred. These liquid softeners may be used alone or in combination of two or more types.

The term "oil" is a general term for extender oil contained in the rubber component and liquid oil components added as compounding agents in the rubber composition, and examples thereof include vegetable oils, process oils, oils obtained by recycling vegetable oils or process oils, or mixtures thereof. From the viewpoint of reducing environmental impact, vegetable oils and oils obtained by recycling are preferred as the oil. Examples of the vegetable oil include palm oil, castor oil, cottonseed oil, soybean oil, linseed oil, rapeseed oil, coconut oil, peanut oil, pine oil, pine tar, tall oil, corn oil, rice bran oil, safflower oil, sesame oil, olive oil, sunflower oil, palm kernel oil, camellia oil, jojoba oil, macadamia nut oil, tung oil, coconut oil, and the like. Examples of the process oil include, for example, paraffin process oil, aromatic process oil, naphthenic process oil, and the like. Commercially available products can be used as the oil, and as commercial products of such oils, products from Idemitsu Kosan Co., Ltd., SANKYO YUKA KOGYO K.K., ENEOS Corporation, Orisoy, H&R, Toyokuni Oil Co., Ltd., Nisshin OilliO Group, Ltd., and the like can be used. These oils may be used alone or in combination of two or more.

As the liquid polymer, a liquid diene polymer is preferred. Examples of such liquid diene polymers include liquid styrene-butadiene copolymer (liquid SBR), liquid polybutadiene (liquid BR), liquid polyisoprene (liquid IR), liquid styrene-isoprene copolymer (liquid SIR), liquid styrene-butadiene-styrene block copolymer (liquid SBS block polymer), liquid styrene-isoprene-styrene block copolymer (liquid SIS block polymer), liquid polyfarnesene, liquid farnesene-butadiene copolymer, and the like. These liquid polymers may be hydrogenated, and the terminals or main chain may be modified with functional groups (polar groups). These liquid polymers may be used alone or in combination of two or more.

The content of the liquid softener is not particularly limited and may be appropriately adjusted depending on, for example, the tire category to which it is applied, the tire member, target performance, and the like. For example, the content of the liquid softener is preferably 5 parts by mass or more, more preferably 10 parts by mass or more, and preferably 100 parts by mass or less, more preferably 70 parts by mass or less, even more preferably 50 parts by mass or less, and still more preferably 30 parts by mass or less, per 100 parts by mass of the rubber component.

(Antioxidant)

The rubber composition of the present embodiment may contain an antioxidant. Examples of such antioxidant include N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-bis(1-ethyl-3-methylpentyl)-p-phenylenediamine, 2,2,4-trimethyl-1,2-dihydroquinoline polymer (TMDQ), 6-ethoxy-2,2,4-trimethyl-1,2-dihydroquinoline (AW), 6-anilino-2,2,4-trimethyl-1,2-dihydroquinoline, and the like. Commercially available products can be used as the antioxidant, and as commercial products of such antioxidant, products from Ouchi Shinko Chemical Industrial Co., Ltd., Sumitomo Chemical Co., Ltd., Seiko-Chemical Co., Ltd., Flexsys, and the like can be used. These antioxidant may be used alone or in combination of two or more.

The content of the antioxidant is not particularly limited and may be appropriately adjusted depending on, for example, the tire category to which it is applied, the tire member, target performance, and the like. For example, the content of the antioxidant is preferably 1 part by mass or more, more preferably 1.5 parts by mass or more, even more preferably 2 parts by mass or more, and preferably 12 parts by mass or less, more preferably 10 parts by mass or less, and even more preferably 8 parts by mass or less, per 100 parts by mass of the rubber component.

(Wax)

The rubber composition of the present embodiment may contain wax. Examples of such wax include, for example, natural waxes such as plant-based waxes and animal-based waxes; petroleum-based waxes such as paraffin wax and microcrystalline wax; synthetic waxes such as polymers of ethylene and polymers of propylene; and the like. Commercially available products can be used as the wax, and as commercial products of such waxes, products from Seiko-Chemical Co., Ltd., Nippon Seiro Co., Ltd., Ouchi Shinko Chemical Industrial Co., Ltd., and the like can be used. These waxes may be used alone or in combination of two or more.

The content of the wax is not particularly limited and may be appropriately adjusted depending on, for example, the tire category to which it is applied, the tire member, target performance, and the like. For example, the content of the wax is preferably 0.5 part by mass or more, more preferably 1 part by mass or more, and preferably 10 parts by mass or less, more preferably 6 parts by mass or less, per 100 parts by mass of the rubber component.

(Stearic Acid)

The rubber composition of the present embodiment may contain stearic acid. Commercially available products can be used as the stearic acid, and as commercial products of such stearic acid, products from NOF Corporation, Kao Corporation, FUJIFILM Wako Pure Chemical Corporation, Chiba Fatty Acid Co., Ltd., and the like can be used. These commercial products of stearic acid may be used alone or in combination of two or more.

The content of the stearic acid is not particularly limited and may be appropriately adjusted depending on, for example, the tire category to which it is applied, the tire member, target performance, and the like. For example, the content of the stearic acid is preferably 1 part by mass or more, more preferably 2 parts by mass or more, and preferably 10 parts by mass or less, more preferably 6 parts by mass or less, per 100 parts by mass of the rubber component.

(Zinc Oxide)

The rubber composition of the present embodiment may contain zinc oxide (zinc white). As the zinc oxide, zinc oxide obtained by recycling is preferred. Commercially available products can be used as the zinc oxide, and as commercial products of such zinc oxide, products from Hakusui Tech Co., Ltd., Seido Chemical Industry Co., Ltd., Sakai Chemical Industry Co., Ltd., Mitsui Mining & Smelting Co., Ltd., Toho Zinc Co., Ltd., and the like can be used. These commercial products of zinc oxide may be used alone or in combination of two or more. Note that the zinc used for zinc oxide may be not only zinc ingot but also zinc obtained from recycled zinc or zinc dross.

The content of the zinc oxide is not particularly limited and may be appropriately adjusted depending on, for example, the tire category to which it is applied, the tire member, target performance, and the like. For example, the content of the zinc oxide is preferably 1 part by mass or more, more preferably 2 parts by mass or more, and preferably 10 parts by mass or less, more preferably 6 parts by mass or less, per 100 parts by mass of the rubber component.

(Sulfur)

It is preferable that the rubber composition of the present embodiment contains sulfur. As the sulfur, those derived from fossil resources, those derived from recycled resources, those obtained by processing biological resource-derived materials, and the like can be used, and from the viewpoint of reducing environmental impact, it is particularly preferable to use sulfur obtained from waste derived from biological resources. As a method for obtaining sulfur from waste derived from biological resources, for example, the method described in the aforementioned Japanese Patent Application No. 2022-140390 can be mentioned. Further, as the sulfur, powdered sulfur, precipitated sulfur, colloidal sulfur, insoluble sulfur, highly dispersible sulfur, soluble sulfur, and the like, which are generally used as crosslinking agents in the rubber industry, may be used. Commercially available products can be used as the sulfur, and as commercial products of such sulfur, products from Tsurumi Chemical Industry Co., Ltd., Hosoi Chemical Industry Co., Ltd., Karuizawa Sulfur Co., Ltd., Shikoku Chemicals Corp., Flexsys, and the like can be used. These sulfur products may be used alone or in combination of two or more.

The content of the sulfur is not particularly limited and may be appropriately adjusted depending on, for example, the tire category to which it is applied, the tire member, target performance, and the like. For example, the content of the sulfur is preferably 0.3 part by mass or more, more preferably 0.5 part by mass or more, even more preferably 0.8 part by mass or more, and preferably 8 parts by mass or less, more preferably 5 parts by mass or less, per 100 parts by mass of the rubber component.

(Vulcanization Accelerator)

It is preferable that the rubber composition of the present embodiment contains a vulcanization accelerator. The vulcanization accelerator can be used regardless of whether it is derived from fossil resources, recycled resources, or biological resources, but from the viewpoint of reducing environmental impact, it is preferable that it is derived from biological resources. The vulcanization accelerator derived from biological resources can be obtained by, for example, the method disclosed in JP 2005-139239 A.

Examples of the vulcanization accelerator include sulfenamide vulcanization accelerators such as N-cyclohexyl-2-benzothiazolesulfenamide (CBS), N,N-dicyclohexyl-2-benzothiazolesulfenamide, N-tert-butyl-2-benzothiazolesulfenamide (TBBS), N-oxyethylene-2-benzothiazolesulfenamide, N,N'-diisopropyl-2-benzothiazolesulfenamide; guanidine vulcanization accelerators such as 1,3-diphenyl guanidine (DPG), 1,3-di-o-tolyl guanidine, o-tolyl biguanidine; thiazole vulcanization accelerators such as 2-mercaptobenzothiazole (M), di-2-benzothiazolyl disulfide (MBTS, DM); thiuram vulcanization accelerators such as tetramethylthiuram disulfide (TMTD), tetrastearylthiuram disulfide, tetrabenzylthiuram disulfide (TBzTD), tetrakis(2-ethylhexyl)thiuram disulfide (TOT-N); and the like. Commercially available products can be used as the vulcanization accelerator, and as commercial products of such vulcanization accelerators, products from Ouchi Shinko Chemical Industrial Co., Ltd., Sumitomo Chemical Co., Ltd., and the like can be used. These vulcanization accelerators may be used alone or in combination of two or more.

The content of the vulcanization accelerator is not particularly limited and may be appropriately adjusted depending on, for example, the tire category to which it is applied, the tire member, target performance, and the like. For example, the content of the vulcanization accelerator is preferably 1 part by mass or more, more preferably 2 parts by mass or more, even more preferably 3 parts by mass or more, and preferably 8 parts by mass or less, more preferably 6 parts by mass or less, and even more preferably 5.5 parts by mass or less, per 100 parts by mass of the rubber component.

(Cellulose Nanofiber)

The rubber composition of the present embodiment may contain cellulose nanofiber (CNF). By compounding cellulose nanofiber into the rubber composition, the rubber composition can be reinforced. As the cellulose nanofiber, a modified cellulose nanofiber is preferred, and such modified cellulose nanofiber is a fine fiber made from modified cellulose as a raw material. The fiber diameter of the cellulose nanofiber is not particularly limited, but is about 3 to 500 nm. The average fiber diameter and average fiber length of the cellulose nanofiber can be obtained by observing each fiber using a scanning electron microscope (SEM), atomic force microscope (AFM), or transmission electron microscope (TEM), and averaging the obtained fiber diameters and fiber lengths. The cellulose nanofiber can be obtained by fibrillating cellulose. Further, the average fiber length and average fiber diameter of the fine fibers can be adjusted by oxidation treatment and fibrillation treatment.

The raw material of the cellulose nanofiber only needs to contain cellulose and is not particularly limited, but examples include plants (for example, wood, bamboo, hemp, jute, kenaf, agricultural waste, cloth, pulp (unbleached softwood kraft pulp (NUKP), bleached softwood kraft pulp (NBKP), unbleached hardwood kraft pulp (LUKP), bleached hardwood kraft pulp (LBKP), bleached kraft pulp (BKP), unbleached softwood sulfite pulp (NUSP), bleached softwood sulfite pulp (NBSP), thermomechanical pulp (TMP), recycled pulp, waste paper, etc.)), animals (for example, tunicates), algae, microorganisms (for example, acetic acid bacteria (Acetobacter)), microbial products, and the like. These cellulose raw materials may be used alone or in combination of two or more.

The content of the cellulose nanofiber is not particularly limited and may be appropriately adjusted depending on, for example, the tire category to which it is applied, the tire member, target performance, and the like. For example, the content of the cellulose nanofiber is preferably in the range of 1 to 100 parts by mass, more preferably in the range of 5 to 70 parts by mass, and even more preferably in the range of 10 to 40 parts by mass, per 100 parts by mass of the rubber component.

(Porous Cellulose Particles)

The rubber composition of the present embodiment may contain porous cellulose particles. The porous cellulose particles are preferably cellulose particles having a porous structure with a porosity of 75 to 95%, and by compounding them into the rubber composition, the on-ice performance can be improved. When the porosity of the porous cellulose particles is 75% or more, the effect of improving on-ice performance is excellent, and when the porosity is 95% or less, the strength of the particles can be increased. The porosity is more preferably 80 to 90%. The porosity of the porous cellulose particles can be determined by measuring the volume of a certain mass of sample (i.e., porous cellulose particles) with a graduated cylinder, determining the bulk specific gravity, and calculating according to the following formula:

Porosity (%) = {1 - [bulk specific gravity of sample (g/mL)]/[true specific gravity of sample (g/mL)]} $\times$ 100

Here, the true specific gravity of cellulose is 1.5.

The particle size of the porous cellulose particles is not particularly limited, but from the viewpoint of wear resistance, those having an average particle size of 1000 $\mu$m or less are preferred. The lower limit of the average particle size is not particularly limited, but is preferably 5 $\mu$m or more. The average particle size is more preferably 100 to 800 $\mu$m, and even more preferably 200 to 800 $\mu$m.

As the porous cellulose particles, spherical particles having a long diameter/short diameter ratio of 1 to 2 are preferred. By using such spherical particles, the dispersibility in the rubber composition is improved, which can contribute to improvement in on-ice performance and maintenance of wear resistance and the like. The long diameter/short diameter ratio is more preferably 1.0 to 1.5.

The average particle size and long diameter/short diameter ratio of the porous cellulose particles are determined as follows. That is, images are obtained by observing the porous cellulose particles under a microscope, and using these images, the long diameter and short diameter (if the long diameter and short diameter are the same, the length in one axial direction and the length in the direction perpendicular to it) of 100 particles are measured, and the average value is calculated to obtain the average particle size, and the average value of the ratio of the long diameter to the short diameter is calculated to obtain the long diameter/short diameter ratio.

As the porous cellulose particles, those commercially available from Rengo Co., Ltd. as "Viscopearl," and those described in JP 2001-323095 A, JP 2004-115284 A, and the like can be suitably used.

The content of the porous cellulose particles is not particularly limited and may be appropriately adjusted depending on, for example, the tire category to which it is applied, the tire member, target performance, and the like. For example, the content of the porous cellulose particles is preferably in the range of 0.3 to 20 parts by mass, more preferably in the range of 1 to 15 parts by mass, and even more preferably in the range of 3 to 15 parts by mass, per 100 parts by mass of the rubber component.

(Solid Fine Particles)

The rubber composition of the present embodiment may contain solid fine particles. By compounding such solid fine particles into the rubber composition, the on-ice performance can be improved. The solid fine particles preferably have an average particle diameter of 1 $\mu$m or more, more preferably 1000 $\mu$m or less, and even more preferably 300 $\mu$m or less. Examples of the solid fine particles include plant-derived powders obtained from plants such as rice husks, walnut powder or walnut shells; animal-derived powders obtained from animals such as eggshells (eggshell powder), bone powder; natural mineral-derived powders such as shirasu; inorganic fine particles such as graphite, zinc oxide whiskers; water-soluble metal salt fine particles such as magnesium sulfate, metal salts of lignin sulfonic acid; non-metallic fibers such as glass fiber; and the like. Among these, rice husks, walnut shells, eggshells, and shirasu are preferred.

The content of the solid fine particles is not particularly limited and may be appropriately adjusted depending on, for example, the tire category to which it is applied, the tire member, target performance, and the like. For example, the content of the solid fine particles is preferably in the range of 0.3 to 20 parts by mass, more preferably in the range of 1 to 15 parts by mass, and even more preferably in the range of 3 to 15 parts by mass, per 100 parts by mass of the rubber component.

(Other)

The rubber composition of the present embodiment may further contain, in addition to the above-described components, various additives generally used in the tire industry, such as fillers including calcium carbonate, talc, alumina, clay, aluminum hydroxide, mica, and the like; organic peroxides; and so on. The content of these additives is not particularly limited and may be appropriately adjusted, for example, according to the applicable tire category, tire member, target performance, and the like. For example, a range of 0.1 to 200 parts by mass per 100 parts by mass of the rubber component is preferred.

(Method for Producing Rubber Composition)

The method for producing the rubber composition of the present embodiment is not particularly limited. For example, the rubber composition can be produced by compounding the above-described rubber component with recovered carbon black and, as necessary, various other selected components, followed by kneading, warming, extrusion, and the like. Further, by vulcanizing the obtained rubber composition, a vulcanized rubber can be obtained.

The kneading conditions are not particularly limited, and various conditions such as the input volume of the kneading apparatus, the rotational velocity of the rotor, ram pressure, kneading temperature, kneading time, and the type of kneading apparatus can be appropriately selected according to the intended purpose. Examples of kneading apparatuses include, but are not limited to, Banbury mixers, Intermix, kneaders, and rolls, which are commonly used for kneading rubber compositions.

The conditions for warming are also not particularly limited, and various conditions such as warming temperature, warming time, and warming apparatus can be appropriately selected according to the intended purpose. Examples of warming apparatuses include, but are not limited to, warming roll machines commonly used for warming rubber compositions.

The conditions for extrusion are also not particularly limited, and various conditions such as extrusion time, extrusion speed, extrusion apparatus, and extrusion temperature can be appropriately selected according to the intended purpose. Examples of extrusion apparatuses include, but are not limited to, extruders commonly used for extruding rubber compositions. The extrusion temperature can be determined as appropriate.

The apparatus, method, and conditions for vulcanization are also not particularly limited and can be appropriately selected according to the intended purpose. Examples of apparatuses for vulcanization include, but are not limited to, molding vulcanizers using molds, which are commonly used for vulcanizing rubber compositions. As for the vulcanization conditions, the temperature is, for example, about 100 to 190°C.

(Applications)

The rubber composition of the present embodiment can be applied to various constituent members of a tire, for example, tread (cap tread, base tread, under tread), cushion rubber, shoulder, sidewall, clinch, bead filler, coating rubber for carcass, insulation, chafer, inner liner, and the like, and can also be used for side reinforcing layers of run flat tires and the like. In addition to tires, the rubber composition of the present embodiment can also be applied to rubber crawlers, seismic isolation rubber, hoses, and the like.

(Tire)

A tire of the present disclosure is characterized by using the rubber composition of the above-described embodiment. In other words, a tire of the present embodiment is characterized by comprising the rubber composition of the present embodiment. By using the rubber composition of the present embodiment, the resulting tire can suppress rubber surface roughening and contribute to improved sustainability.

A tire according to another embodiment of the present disclosure comprises a pair of bead portions, a pair of sidewall portions, a tread portion continuous with both sidewall portions, and a carcass including at least one carcass ply extending toroidally between the pair of bead portions, and is provided with side rubber at the outer side in the tire width direction of the carcass in the sidewall portions, wherein the rubber composition of the present embodiment is used for the side rubber. In this case, rubber surface roughening in the side rubber of the tire is suppressed.

Further, a tire according to one embodiment of the present disclosure comprises a pair of bead portions, a pair of sidewall portions, a tread portion continuous with both sidewall portions, and a carcass including at least one carcass ply extending toroidally between the pair of bead portions, and further comprises a rubber chafer disposed at least in part of a contact portion of the bead portions with a rim, wherein the rubber composition of the present embodiment is used for the rubber chafer. In this case, rubber surface roughening in the rubber chafer of the tire is suppressed. Note that the rubber chafer is generally a rubber member disposed to correspond to high contact pressure with the applicable rim.

The tire of the present embodiment can be produced by a conventional method using the above-described rubber composition. For example, the tire of the present embodiment may be obtained by molding using an unvulcanized rubber composition according to the type of tire to be applied, followed by vulcanization, or by molding using a semi-vulcanized rubber that has undergone a preliminary vulcanization step or the like, followed by main vulcanization. The tire of the present embodiment is preferably a pneumatic tire, and as the gas to be filled in the pneumatic tire, in addition to ordinary air or air with adjusted oxygen partial pressure, inert gases such as nitrogen, argon, and helium can be used.

EXAMPLES

Hereinafter, the present disclosure will be described in more detail with reference to examples, but the present disclosure is not limited to the following examples and can be appropriately modified within the scope not departing from the gist thereof.

Two types of rubber compositions having the compounding compositions indicated in Table 1 were prepared. In the rubber composition of Example 1, it was confirmed that the recovered carbon black constituted a plurality of aggregates. For such a rubber composition, the total mass ratio of components derived from biological resources (biomass resources) and components derived from recovered resources (recycled resources) was calculated, and the sustainable material ratio was determined as an integer. The results are indicated in Table 1.

Further, for the carbon black (virgin carbon black, recovered carbon black) compounded in each example, the particle size distribution on a volume basis was measured using a laser diffraction particle size distribution measuring apparatus (manufactured by Shimadzu Corporation). Next, by excluding data for diameters less than 1.0 $\mu$m from the particle size distribution and normalizing, a "particle size distribution A for carbon black having a diameter of 1.0 $\mu$m or more among the carbon black" was obtained. Then, from this particle size distribution A, the proportion of those having a diameter of 5.0 $\mu$m or more was determined. The results are indicated in Table 1.

Further, for the rubber composition of each example, three sheets of unvulcanized rubber with a thickness of 2 mm were prepared. These three unvulcanized rubber sheets were stacked, and only the top rubber sheet was provided with holes of 1 mm and 2 mm in depth. Next, the three stacked unvulcanized rubber sheets were vulcanized. The degree to which the above holes were closed upon vulcanization was visually checked. If the holes were closed, the result was evaluated as A; if the holes were not closed, the result was evaluated as B. If the holes were closed, it was determined that the occurrence of rubber surface roughening could be suppressed. The results are indicated in Table 1.

[Table 1]

| Formulation | | | | | Comparative Example 1 | Example 1 |
|---|---|---|---|---|---|---|
| | Natural rubber | | | Parts by mass | 40 | 40 |
| | Butadiene rubber | | | | 60 | 60 |
| | Carbon black | Virgin carbon black | | | 35 | - |
| | | Recovered carbon black | | | - | 35 |
| | Age resistor 1 | | | | 3 | 3 |
| | Age resistor 2 | | | | 1 | 1 |
| | Oil | | | | 4 | 4 |
| | Fatty acid | | | | 2 | 2 |
| | Zinc oxide | | | | 3 | 3 |
| | Wax | | | | 1.7 | 1.7 |
| | Other chemicals | | | | 3.2 | 3.2 |

(continued)

| | | | Comparative Example 1 | Example 1 |
|---|---|---|---|---|
| Evaluation | Proportion of carbon black with diameter of 5.0 μm or more *1 | % | 0 | 46 |
| | Total parts by mass of all components | Parts by mass | 152.9 | 152.9 |
| | Parts by mass of sustainable materials | Parts by mass | 40 | 75 |
| | Sustainable material ratio | Mass% | 26 | 49 |
| | Rubber surface roughening (depth 1 mm) | - | B | A |
| | Rubber surface roughening (depth 2 mm) | - | B | A |

*1 In particle size distribution A with carbon black having diameter of 1.0 μm or more as subject

Butadiene rubber: manufactured by UBE Elastomer Co., Ltd., trade name "BR150L"
Virgin carbon black: manufactured by Asahi Carbon Co., Ltd., N550
Recovered carbon black: manufactured by Enrestec Inc., trade name "PB365," ash content = 17 mass%
Antioxidant 1: manufactured by Ouchi Shinko Chemical Industrial Co., Ltd., trade name "Nocrac 6C"
Antioxidant 2: manufactured by Ouchi Shinko Chemical Industrial Co., Ltd., trade name "Nocrac 224"
Oil: manufactured by ENEOS Corporation, trade name "A/Omix"
Fatty acid: manufactured by Miyoshi Oil & Fat Co., Ltd., trade name "MXST"
Other chemicals: total of sulfur, vulcanization accelerator, and resin (these compositions are constant)

INDUSTRIAL APPLICABILITY

According to the present disclosure, it is possible to provide a rubber composition capable of suppressing the occurrence of rubber surface roughening during mold vulcanization and contributing to improved sustainability.
Further, according to the present disclosure, it is possible to provide a tire in which rubber surface roughening is suppressed and which can contribute to improved sustainability.

**Claims**

1. A rubber composition comprising a rubber component and carbon black including recovered carbon black, wherein

   the recovered carbon black constitutes a plurality of aggregates in the rubber composition, and
   in a particle size distribution A with carbon black having a diameter of 1.0 μm or more among the carbon black as a subject, a proportion of particles having a diameter of 5.0 μm or more is 1% or more.

2. The rubber composition according to claim 1, wherein the recovered carbon black is obtained by pyrolysis of a vulcanized rubber product containing carbon black.

3. The rubber composition according to claim 1 or 2, wherein the recovered carbon black has an ash content of 20 mass% or less.

4. The rubber composition according to claim 1 or 2, wherein, in the particle size distribution A, the proportion of particles having a diameter of 5.0 μm or more is 10% or more.

5. The rubber composition according to claim 1 or 2, further comprising at least one of rubber powder and recovered rubber.

6. A tire obtained using the rubber composition according to claim 1 or 2.

7. The tire according to claim 6, wherein

the tire comprises a pair of bead portions, a pair of sidewall portions, a tread portion continuous with both of the sidewall portions, and a carcass including at least one carcass ply extending toroidally between the pair of bead portions,
the tire further comprises side rubber provided at an outer side in a tire width direction of the carcass in the sidewall portions, and
the rubber composition is used for the side rubber.

8. The tire according to claim 6, wherein

the tire comprises a pair of bead portions, a pair of sidewall portions, a tread portion continuous with both of the sidewall portions, and a carcass including at least one carcass ply extending toroidally between the pair of bead portions,
the tire further comprises a rubber chafer disposed at least in part of a contact portion of the bead portions with a rim, and
the rubber composition is used for the rubber chafer.

## INTERNATIONAL SEARCH REPORT

| International application No. |
|---|
| **PCT/JP2024/027970** |

---

**A. CLASSIFICATION OF SUBJECT MATTER**

*C08L 21/00*(2006.01)i; *B60C 1/00*(2006.01)i; *B60C 15/06*(2006.01)i; *B60C 19/00*(2006.01)i; *C08K 3/04*(2006.01)i
FI:  C08L21/00; C08K3/04; B60C1/00 B; B60C1/00 Z; B60C15/06 C; B60C19/00 L; B60C19/00 Z

According to International Patent Classification (IPC) or to both national classification and IPC

---

**B. FIELDS SEARCHED**

Minimum documentation searched (classification system followed by classification symbols)

C08L21/00; B60C1/00; B60C15/06; B60C19/00; C08K3/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

---

**C. DOCUMENTS CONSIDERED TO BE RELEVANT**

| Category* | Citation of document, with indication, where appropriate, of the relevant passages | Relevant to claim No. |
|---|---|---|
| X | JP 2022-146475 A (THE YOKOHAMA RUBBER CO., LTD.) 05 October 2022 (2022-10-05) claims, paragraphs [0011], [0016], examples 1-6, comparative examples 1-2, 5-6 | 1-4, 6 |
| Y | | 1-8 |
| Y | JP 2023-085807 A (SUMITOMO RUBBER INDUSTRIES, LTD.) 21 June 2023 (2023-06-21) claims, paragraphs [0062], [0066], [0154] | 1-8 |
| Y | JP 2023-083910 A (SUMITOMO RUBBER INDUSTRIES, LTD.) 16 June 2023 (2023-06-16) claims, paragraphs [0068], [0072], [0085], [0151] | 1-8 |
| Y | JP 2023-084930 A (SUMITOMO RUBBER INDUSTRIES, LTD.) 20 June 2023 (2023-06-20) claims, paragraphs [0067], [0070], [0158] | 1-8 |
| P, X | JP 7467745 B1 (BRIDGESTONE CORPORATION) 15 April 2024 (2024-04-15) claims, paragraphs [0054], [0090], [0127], example 1 | 1-8 |
| P, X | JP 7483997 B1 (BRIDGESTONE CORPORATION) 15 May 2024 (2024-05-15) claims, paragraphs [0043], [0088], [0131], example 1 | 1-7 |

---

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **10 September 2024** | **24 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/027970**

| Patent document cited in search report | | | Publication date (day/month/year) | Patent family member(s) | | | Publication date (day/month/year) |
|---|---|---|---|---|---|---|---|
| JP | 2022-146475 | A | 05 October 2022 | WO | 2022/202698 | A1 | |
| JP | 2023-085807 | A | 21 June 2023 | (Family: none) | | | |
| JP | 2023-083910 | A | 16 June 2023 | (Family: none) | | | |
| JP | 2023-084930 | A | 20 June 2023 | (Family: none) | | | |
| JP | 7467745 | B1 | 15 April 2024 | (Family: none) | | | |
| JP | 7483997 | B1 | 15 May 2024 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017094853 A
- JP 2022140390 A
- WO 2016194316 A
- WO 2019117256 A
- JP 2022179158 A
- JP 2015520259 A
- EP 3427975 A

- JP 6856781 B
- EP 3173251 A
- JP 2019038728 A
- JP 2005139239 A
- JP 2001323095 A
- JP 2004115284 A

### Non-patent literature cited in the description

- *Rubber Chemistry and Technology*, 2012, vol. 85 (3), 408-449

- Comparison of surface morphology and chemistry of pyrolytic carbon black and commercial carbon black. *Powder Technology*, 2005, vol. 160, 190-193